# EUROPÄISCHE PATENTSCHRIFT

(11) **EP 0 911 202 B1**
(45) Veröffentlichungstag und Bekanntmachung des Hinweises auf die Patenterteilung: **23.10.2002**
(21) Anmeldenummer: 98890275.5
(22) Anmeldetag: 30.09.1998
(51) Int. Cl.: B60K 15/04, B60K 15/035

(54) **Vorrichtung zur Schiebbetätigung einer ORVR-Ventileinrichtung durch die Bewegung einer Tankverschlussklappe**
Fuel cap actuated device for sliding motion actuation of an OVRV-valve arrangement
Dispositif pour le mouvement coulissant d'un dispositif de soupape ORVR commandé par le mouvement d'un bouchon de réservoir de carburant

(30) Priorität: 15.10.1997 AT 174897
(43) Veröffentlichungstag der Anmeldung: 28.04.1999
(73) Patentinhaber: Tesma Motoren- und Getriebetechnik Ges.m.b.H., 8160 Preding-Krottendorf (AT)
(72) Erfinder: Maier, Bernhard, A-8344 Bad Gleichenberg (AT)
(74) Vertreter: Kovac, Werner, Dipl.-Ing.

(56) Entgegenhaltungen:
- DE-A- 3 605 893
- DE-A- 19 638 162
- PATENT ABSTRACTS OF JAPAN vol. 097, no. 002, 28. Februar 1997 (1997-02-28) & JP 08 258578 A (MITSUBISHI MOTORS CORP), 8. Oktober 1996 (1996-10-08)

## Beschreibung

Die vorliegende Erfindung bezieht sich auf eine Vorrichtung zur Schiebbetätigung des Steuerelementes einer am oberen Ende eines Kraftstofftank-Einfüllstutzens angeordneten, Gasströme und Flüssigkeitsniveaus während des Tankvorganges steuernden Ventileinrichtung durch die Bewegung einer im Einfüllstutzenende seitlich angelenkten und von einer eingeführten Zapfpistole wegschwenkbaren Verschlußklappe, wie sie aus der DE-A-360583 bekannt gewerden ist.

Zur Umsetzung der Schwenkbewegung der Verschlußklappe ("Bleifreiklappe") in die zur Betätigung des Steuerelementes der Ventileinrichtung erforderliche Schiebebewegung sind beispielsweise Gewinde- oder Zahnstangentriebe bekannt. Bei derartigen Trieben besteht die Gefahr eines Verklemmens bei starken Beanspruchungen und rauhem Einsatzgebiet. Darüber hinaus sind sie relativ voluminös, was bei den beengten Platzverhältnissen im Bereich des Einfüllstutzens Probleme bereitet. Eine direkte Betätigung des Ventilsteuerelementes durch die aufschwenkende Klappe ist anderseits nicht möglich, da durch die auftretenden Reibungskräfte beim Abgleiten des Steuerelementes auf der Klappe Querkräfte in das Steuerelement eingeleitet werden, die zu einem Verklemmen bzw. Blockieren der Ventileinrichtung führen können.

Die Erfindung setzt sich daher zum Ziel, eine kompakt aufgebaute und störungsunanfällige Vorrichtung zur querkraftfreien Schiebebetätigung eines am Ende eines Einfüllstutzen angeordneten Ventils durch die aufschwenkende Bleifreiklappe zu schaffen. Dieses Ziel wird mit einer Vorrichtung der einleitend genannten Art erreicht, die sich erfindungsgemäß auszeichnet durch einen in der Seitenwand des Einfüllstutzenendes normal zur Klappenschwenkachse linear geführten Schlitten, sowie einen an seinem einen Ende in der Seitenwand parallel zur Klappenschwenkachse und radial außerhalb derselben angelenkten Kniehebel, der mit seinem anderen Ende auf der Unterseite der Klappe gleitet und mit seinem Knieabschnitt den Schlitten schiebt.

Die erfindungsgemäße Vorrichtung setzt die Schwenkbewegung der Bleifreiklappe in eine vollkommen querkraftfreie Schiebebewegung für das Ventilsteuerelement um, und dies alles bei äußerst kompaktem, einfachem und störungsunabfälligem Aufbau.

Eine bevorzugte Ausführungsform der Erfindung zeichnet sich dadurch aus, daß der Schlitten U-förmig ist, wobei seine beiden Schenkel in der Seitenwand geführt sind, sein Mittelsteg eine nach außen gewandte Anlagefläche für das Steuerelement der Ventileinrichtung bildet, und in dessen zentraler Aussparung sich der Knieabschnitt des Kniehebels bewegt. Dies ermöglicht einen noch kompakteren Aufbau.

Bevorzugt wird hiebei der Knieabschnitt mit seitlichen Zapfen versehen, welche in Kulissen an den Innenseiten der Schenkel eingreifen, was die Gleitreibung vermindert.

In jedem Fall ist es besonders günstig, wenn gemäß einem weiteren Merkmal der Erfindung die Führung des Schlittens in der Seitenwand mit einer Federraste ausgestattet ist, welche bei der Montage am Anfang der Einführbewegung des Schlittens in die Seitenwand zu überwinden ist. Dies bietet eine Verliersicherung für den Schlitten in der Zeit bis zum Zusammenbau des Einfüllstutzenendes mit der Ventileinrichtung.

Die Erfindung wird nachstehend an Hand eines in den beigeschlossenen Zeichnungen dargestellten Ausführungsbeispieles näher erläutert. In den Zeichnungen zeigt
Fig. 1 das obere Ende eines erfindungsgemäß ausgestatteten Kraftstofftank-Einfüllstutzens im Schnitt,
Fig. 2 eine Untersicht auf die Vorrichtung von Fig. 1 mit seitlich angedeuteter Ventileinrichtung,
Fig. 3 einen teilweisen Schnitt gemäß der Linie III-III von Fig. 2,
Fig. 4 eine ausschnittsweise Seitenansicht gemäß der Linie IV-IV von Fig. 1, und
Fig. 5 eine teilweise Schnittansicht gemäß der Linie V-V von Fig. 1.

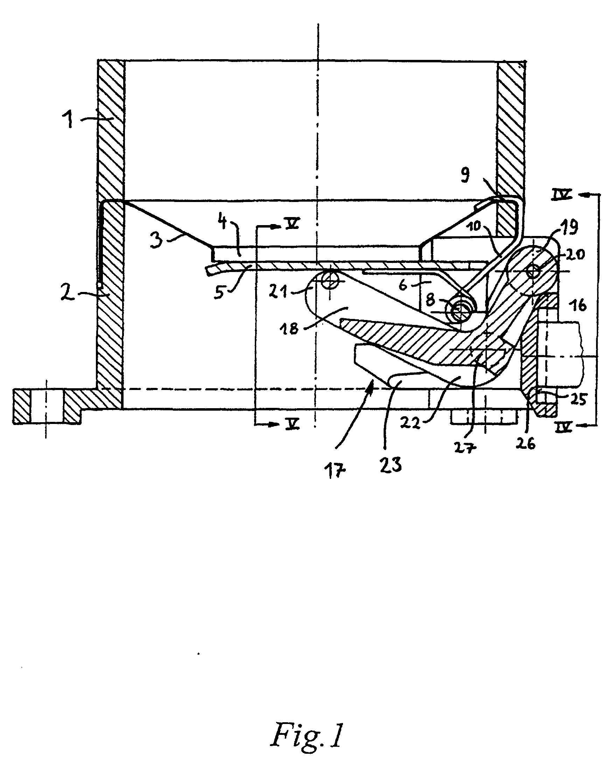

In Fig. 1 ist das obere Ende eines Einfüllstutzens 1 gezeigt, dessen (nicht dargestelltes) unteres Ende in einen (ebenfalls nicht dargestellten) Kraftstofftank mündet. Die obere Öffnung des Einfüllstutzens 1 ist mit Hilfe eines herkömmlichen Tankdeckels z.B. über Schraub- oder Bajonettgewinde verschließbar (nicht dargestellt).

In das Einfüllstutzenende 1 ist ein Einsatz 2 zur Montage eines trichterförmigen Reduzierringes 3 und zur Lagerung einer dessen zentrale Öffnung 4 verschließenden Verschlußklappe 5 eingesetzt. Der Einsatz 2 kann, ebenso wie der Reduzierring 3, auch einstückig mit dem Einfüllstutzenende 1 ausgebildet sein. Die Öffnung 4 des Reduzierringes 3 hat einen solchen Durchmesser, daß sie lediglich den Durchtritt kleindurchmeßriger, für die Abgabe von Bleifreibenzin bestimmter Zapfpistolen-Füllrohre ermöglicht. Die Verschlußklappe 5 kann daher von bleifreikraftstofführenden Zapfpistolen nach unten zur Seite geschwenkt werden, und wird deshalb auch als "Bleifreiklappe" bezeichnet.

Die Schwenklagerung der Verschlußklappe 5 erfolgt über angesetzte Lagerlaschen 6, welche von einer in der Seitenwand 7 des Einfüllstutzenendes 1 gelagerten Welle 8 durchsetzt werden. Eine auf die Welle 8 aufgezogene und einerseits an der Unterseite der Verschlußklappe 5 und anderseits an einer Verankerungsaussparung 9 der Seitenwand 7 angreifende Feder 10 spannt die Verschlußklappe 5 von unten gegen den Rand der Öffnung 4 vor.

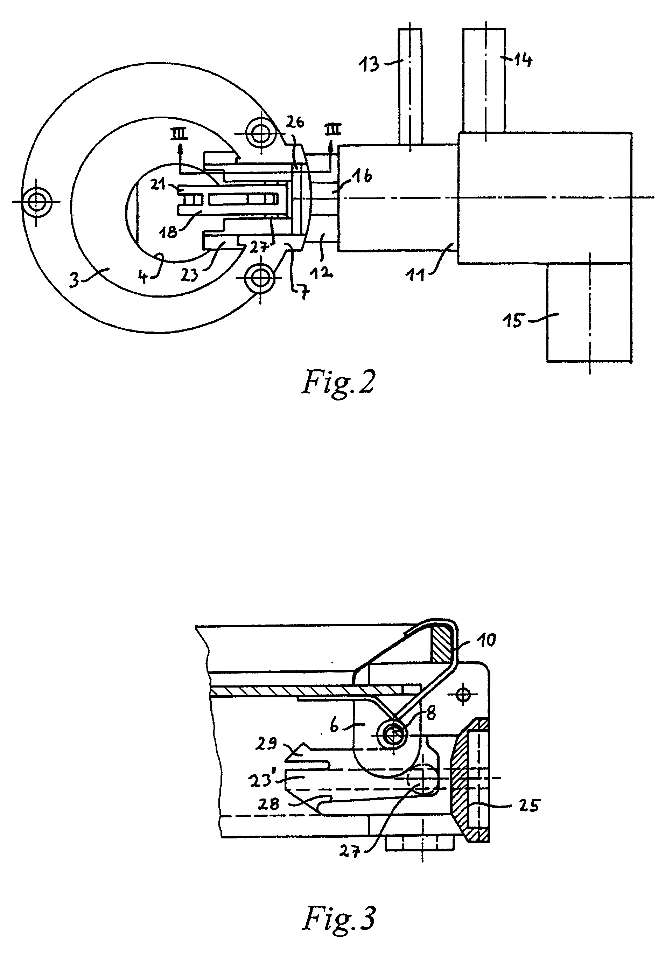

Seitlich neben dem Einfüllstutzenende 1 ist eine Ventileinrichtung 11 (Fig. 2) über nicht näher dargestellte Mittel abgestützt, beispielsweise angeflanscht. Die Ventileinrichtung 11 ist Teil eines sogenannten ORVR-Systems (on board refueling vapor recovery system) und steuert die während des Betankungsvorganges auftretenden Gasströme und Flüssigkeitsniveaus. Beim ORVR-System werden die beim Betanken auftretenden Kraftstoffdämpfe am Fahrzeug ("on board") in einem mit einem Aktivkohlefilter ausgestatteten Auffangbehälter aufgefangen. Der Auffangbehälter wird im Fahrbetrieb von den Verbrennungszufuhrgasen durchspült, welche die Kraftstoffrückstände aus dem Aktivkohlefilter herauslösen und der Verbrennung zuführen.

Die Ventileinrichtung 11 ist beispielsweise ein 4/2-Wegeventil mit vier Anschlüssen 12-15. Im einzelnen führt der Anschluß 15 zu dem Aktivkohlefilter; der großdurchmeßrige Anschluß 12 ist direkt an das Einfüllstutzenende 1 angeschlossen, entlüftet während des Betankens den Kraftstofftank in den Auffangbehälter und ist im Fahrbetrieb geschlossen; der kleindurchmeßrige Anschluß 13 ist ebenfalls an das Einfüllstutzenende 1 angeschlossen, jedoch nur im Fahrbetrieb geöffnet, um den Einfüllstutzen zu entlüften und für einen Druckausgleich im Einfüllstutzen zu sorgen; und der Anschluß 14 schließt an einen Gasauffangraum an der Oberseite des Kraftstofftankes an, ist während des Tankvorganges geschlossen und im Fahrbetrieb geöffnet, und sorgt für die dem Fachmann bekannte Überfüll-Verhinderungsfunktion.

Die Umschaltung der Ventileinrichtung 11 zwischen Betankungsstellung einerseits (Verschlußklappe 5 geöffnet) und Fahrbetrieb anderseits (Verschlußklappe 5 geschlossen) erfolgt über ein schiebend zu betätigendes Steuerelement 16 (Ventilspindel, Ventilstößel) der Ventileinrichtung 11 und einen allgemein mit 17 bezeichneten Mechanismus zur Umsetzung der Schwenkbewegung der Verschlußklappe 5 in die Schiebebewegung des Steuerelementes 16. Auf Grund der beengten Platzverhältnisse muß der Mechanismus 17 einerseits kompakt sein, anderseits die Einleitung jedweder Querkräfte in das Steuerelement 16, d.h. von Kräften, die normal zur Schieberichtung des Steuerelementes 16 verlaufen, verhindern.

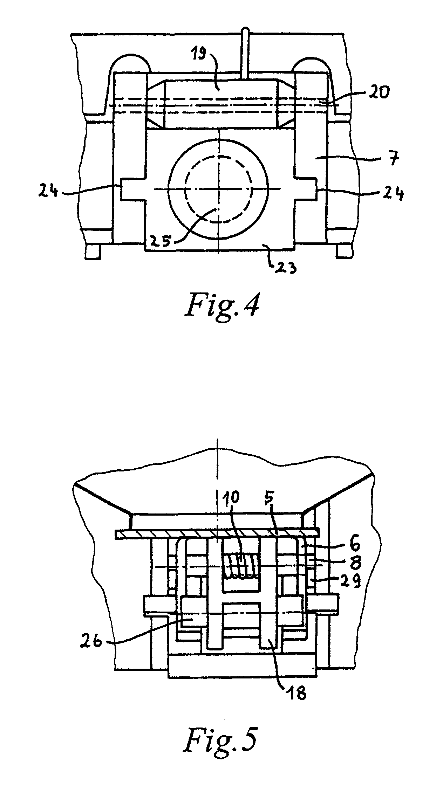

Zu diesem Zweck weist der Mechanismus 17 einen Kniehebel 18 auf, welcher an seinem einen Ende 19 bei 20 radial außerhalb der Welle 8 in der Seitenwand 7 angelenkt ist und mit seinem anderen Ende 21 auf der Unterseite der Klappe 5 gleitet. Sein mit 22 bezeichneter Knieabschnitt übergreift die Welle 8 der Klappe 5 und wirkt mit einem Schlitten 23 zusammen, der in der Seitenwand 7, genauer gesagt in Nut/Feder-Führungen 24 (Fig. 4), normal zur Schwenkachse der Klappe 5 linear geführt ist. Der Schlitten 23 ist an seiner Außenseite mit einer Anlagefläche 25 für das Ende des Steuerelementes 16 der Ventileinrichtung 11 versehen und betätigt dieses bei seiner Auswärtsbewegung.

Der Schlitten 23 ist in der Draufsicht U-förmig (Fig. 2), wobei seine beiden Schenkel 23' jeweils über die Nut/Feder-Führungen 24 in der Seitenwand 7 geführt sind, und sein Mittelsteg 26 die Anlagefläche 25 darbietet. Dadurch ist es möglich, daß sich der Kniehebel 18 in der zentralen Aussparung des Schlittens 23 bewegt.

Der Knieabschnitt 22 des Kniehebels 18 kann direkt auf den Steg 26 des Schlittens 23 einwirken. Im dargestellten Fall ist der Knieabschnitt 22 jedoch mit seitlichen Zapfen 27 ausgestattet, welche in Kulissen 28 (Fig. 3) an den Innenseiten der Schenkel des Schlittens 23 eingreifen.

Die beiden Schenkel 23' des Schlittens 23 sind mit federnden Rasthaken 29 ausgestattet, die bei der erstmaligen Montage der Vorrichtung, wenn der Schlitten 23 erstmals von außen in die Seitenwand 7 mit Hilfe der Nut/Feder-Führungen 24 eingeschoben wird, zu Beginn des Einführvorganges an der Welle 8 der Klappe 5 federnd vorbeitreten und dadurch eine Verliersicherung für den Schlitten 29, solange die Ventileinrichtung 11 noch nicht an den Mechanismus 17 angebaut ist, bieten.

Die Schiebeachse des Schlittens 23 und des Steuerelementes 16 muß nicht wie in Fig. 1 dargestellt senkrecht zur Achse des Einfüllstutzenendes 1 verlaufen, sondern kann auch schräg dazu geneigt sein, solange sie normal zur Schwenkachse der Klappe 5 verläuft.

## Patentansprüche

1. Vorrichtung zur Schiebbetätigung des Steuerelementes einer am oberen Ende eines Kraftstofftank-Einfüllstutzens angeordneten, Gasströme und Flüssigkeitsniveaus während des Tankvorganges steuernden Ventileinrichtung durch die Bewegung einer im Einfüllstutzenende seitlich angelenkten und von einer eingeführten Zapfpistole wegschwenkbaren Verschlußklappe, **gekennzeichnet durch** einen in der Seitenwand (7) des Einfüllstutzenendes (1) normal zur Klappenschwenkachse (8) linear geführten Schlitten (23), sowie einen an seinem einen Ende (19) in der Seitenwand (7) parallel zur Klappenschwenkachse (8) und radial außerhalb derselben angelenkten Kniehebel (18), der mit seinem anderen Ende (21) auf der Unterseite der Klappe (5) gleitet und mit seinem Knieabschnitt (22) den Schlitten (23) schiebt.

2. Vorrichtung nach Anspruch 1, **dadurch gekennzeichnet, daß** der Schlitten (23) U-förmig ist, wobei seine beiden Schenkel (23') in der Seitenwand (7) geführt sind, sein Mittelsteg (26) eine nach außen gewandte Anlagefläche (25) für das Steuerelement (16) der Ventileinrichtung (11) bildet, und in dessen zentraler Aussparung sich der Knieabschnitt (22) des Kniehebels (18) bewegt.

3. Vorrichtung nach Anspruch 2, **dadurch gekennzeichnet, daß** der Knieabschnitt (22) mit seitlichen Zapfen (27) versehen ist, welche in Kulissen (28) an den Innenseiten der Schenkel (23') eingreifen.

4. Vorrichtung nach einem der Ansprüche 1 bis 3, **dadurch gekennzeichnet, daß** die Führung des Schlittens (23) in der Seitenwand (7) mit einer Federraste (29) ausgestattet ist, welche bei der Montage am Anfang der Einführbewegung des Schlittens (23) in die Seitenwand (7) zu überwinden ist.

## Claims

1. A device for slidingly actuating the control element of a valve device arranged at the upper end of the filler neck of a fuel tank and controlling the gas flow and fluid level during the filling operation by moving a cap which is laterally articulated in the filler neck end and can be pivoted away from an inserted fuel nozzle, **characterised**
**by** a slide linearly guided normally relative to the pivot axis (8) of the cap in the side wall (7) of the filler neck end (1), and by a toggle lever (18) which is articulated at its one end (19) in the side wall (7) in parallel to the pivot axis (8) of the cap and radially outside said side wall (7) and which, by means of its other end (21), slides on the underside of the cap (5) and pushes the slide (23) by means of its toggle portion (22).

2. A device according to claims 1,
**characterised in**
**that** the slide (23) is U-shaped, that the two arms (23') of same are guided in the side wall (7), that the central web (26) of same forms an outwardly facing contact face (25) for the control element (16) of the valve device (11) and that the toggle portion (22) of the toggle lever (18) moves in the central recess of said slide (23).

3. A device according to claim 2,
**characterised in**
**that** the toggle portion (22) is provided with side journals (27) which engage wings (28) at the insides of the arms (23').

4. A device according to any one of claims 1 to 3,
**characterised in**
**that** the guiding means of the slide (23) in the side wall (7) are provided with a resilient catch (29) which has to be overcome during the assembly procedure at the start of the movement introducing the slide (23) into the side wall (7).

## Revendications

1. Dispositif pour faire coulisser l'élément de commande d'un dispositif à clapet disposé à l'extrémité supérieure d'une buse de remplissage et commandant les flux de gaz et les niveaux de liquide pendant le processus de remplissage en déplaçant un volet de fermeture articulé latéralement dans l'extrémité de la buse de remplissage et apte à pivoter pour s'écarter du pistolet distributeur qui a été inséré, **caractérisé par** un coulisseau (23) guidé de façon rectiligne dans la paroi latérale (7) de l'extrémité de la buse de remplissage (1) perpendiculairement à l'axe de pivotement (8) du volet, ainsi que par un levier coudé (18) articulé à une de ses extrémités (19) dans la paroi latérale (7) parallèlement à l'axe de pivotement (8) du volet et radialement à l'extérieur de celui-ci, lequel levier glisse avec son autre extrémité (21) du côté inférieur du volet (5) et déplace avec sa section coudée (22) le coulisseau (32).

2. Dispositif selon la revendication 1, **caractérisé en ce que** le coulisseau (23) a une forme de U dont les deux branches (23') sont guidées dans la paroi latérale (7), et dont la branche médiane (26) forme une surface d'appui (25), dirigée vers l'extérieur, pour l'élément de commande (16) du dispositif à clapet (11), la section coudée (22) du levier coudé (18) se déplaçant dans un évidement central ménagé dans ledit élément de commande.

3. Dispositif selon la revendication 2, **caractérisé en ce que** la section coudée (22) est dotée de pions latéraux (27) qui sont en prise dans des glissières (28) prévues du côté intérieur de chaque branche (23').

4. Dispositif selon l'une des revendications 1 à 3, **caractérisé en ce que** le moyen de guidage du coulisseau (23) dans la paroi latérale (7) est équipé d'un taquet d'enclenchement élastique (29) qui doit être franchi lors du montage, au début du mouvement d'insertion du coulisseau (23) dans la paroi latérale (7).
